**Europäisches Patentamt**

**European Patent Office**

**Office européen des brevets**

(19)

(11) Veröffentlichungsnummer: **0 317 851 B1**

(12) # EUROPÄISCHE PATENTSCHRIFT

(45) Veröffentlichungstag der Patentschrift: **22.01.92**

(51) Int. Cl.⁵: **F25J 3/08**, C01B 3/50

(21) Anmeldenummer: **88118863.5**

(22) Anmeldetag: **11.11.88**

(54) **Verfahren und Vorrichtung zum Zerlegen eines Gasgemisches.**

(30) Priorität: **24.11.87 DE 3739724**

(43) Veröffentlichungstag der Anmeldung:
**31.05.89 Patentblatt 89/22**

(45) Bekanntmachung des Hinweises auf die
Patenterteilung:
**22.01.92 Patentblatt 92/04**

(84) Benannte Vertragsstaaten:
**BE DE FR GB GR NL**

(56) Entgegenhaltungen:
**EP-A- 0 017 174**
**DE-A- 2 323 410**

**REVUE DE L'ASSOCIATION FRANCAISE DES TECHNIOUES DU PETROLE, Nr. 238, 7. August 1976; M.J.-P. BUFFIERE: "La purification de l'hydrogene par cryogenie"**

(73) Patentinhaber: **Linde Aktiengesellschaft**
**Abraham-Lincoln-Strasse 21**
**W-6200 Wiesbaden(DE)**

(72) Erfinder: **Bauer, Heinz, Dr. rer. nat.**
**Nibelungenstrasse 6**
**W-8000 München 19(DE)**

(74) Vertreter: **Schaefer, Gerhard, Dr.**
**Linde Aktiengesellschaft Zentrale Patentabteilung**
**W-8023 Höllriegelskreuth(DE)**

## Beschreibung

Die Erfindung betrifft ein Verfahren sowie eine Vorrichtung zum Zerlegen eines im wesentlichen Wasserstoff ($H_2$), Methan ($CH_4$) und Kohlenmonoxid (CO) enthaltenden Gasgemisches mittels einer physikalischen Tieftemperaturwäsche mit flüssigem Methan sowie nachfolgender $H_2$-Abtrennung aus dem beladenen Methan mittels Strippen oder Entspannen und daran anschließender Regenerierung des beladenen Methans durch CO/$CH_4$-Trennung nach dem ersten Teil des Anspruchs 1 bzw. 6.

Bei einem bekannten Verfahren dieser Art (Linde-Berichte aus Technik und Wissenschaft, Nr. 55, 1984, Seiten 38 bis 42) wird Kohlenmonoxid bei tiefer Temperatur in einer Waschsäule mittels flüssigem Methan aus dem Rohgas wie z.B. Steam-Reformer-Gas ausgewaschen und $H_2$ über Kopf der Waschsäule abgezogen. Um das Kohlenmonoxid als Produkt zu erhalten, wird in einer Regeneriersäule das CO vom Methan, beispielsweise mittels Rektifikation, abgetrennt und das gereinigte $CH_4$ in die Waschsäule rückgeführt. Da jedoch ein möglichst reines Produkt-CO gewünscht wird, wird in einem der Regenerierung vorgeschalteten Verfahrensschritt der $H_2$-Gehalt reduziert, indem das beladene Methan aus der Waschsäule einer Strippsäule aufgegeben wird. Dabei wird Wasserstoff, der noch mit 20 bis 60 Mol. % CO und 0.5 bis 5 Mol.% $CH_4$ verunreinigt ist, frei.

Dieser im Wasserstoff verbleibende Anteil an CO stellt im Hinblick auf die Ausbeute an Produkt-CO einen Verlust von bis zu 10% dar, welcher die Wirtschaftlichkeit des Verfahrens nachteilig beeinflußt. Typische CO-Ausbeuten beim bekannten Verfahren liegen im Bereich von 94 bis 97%.

Aus "Revue De L'Association Française Des Techniques Du Pétrole, Nr. 238, 07.08.1976, M.J.-P. Buffière: La purification de l'hydrogène par cryogénie", ist ein Verfahren bekannt, bei dem ein Gasgemisch einer physikalischen Tieftemperaturwäsche mit flüssigem Methan unterzogen wird, bei dem aus dem beladenen Methan $H_2$ durch Entspannen abgetrennt wird und bei dem das durch CO/$CH_4$-Trennung regenerierte Methan in die Waschsäule rückgeführt wird. Zum Entspannungsbehälter führen zwei Zuleitungen aus der Waschsäule, in denen beladenes CO-haltiges flüssiges Methan zum Entspannungsbehälter geleitet wird.

Somit ist bei den bekannten Verfahren die Ausbeute an Produkt-CO nicht optimal.

Der Erfindung liegt deshalb die Aufgabe zugrunde ein Verfahren bzw. eine Vorrichtung der eingangs genannten Art so auszugestalten, daß die Zerlegung des Gasgemisches zu einer optimalen CO-Ausbeute führt bei gleichzeitiger Minimierung der CO-Verluste im $H_2$-Stripperbzw. Entspannungsbehälter.

Diese Aufgabe wird erfindungsgemäß dadurch gelöst, daß eine Teilmenge des regenerierten Methans beim Entspannen bzw. beim Strippen zugegeben wird, bzw. daß eine Stichleitung von der Leitung für regeneriertes Methan zum Kopf der Strippsäule bzw. des Entspannungsbehälters führt.

Die Erfindung beruht auf der Überlegung, daß das bei der Entspannung bzw. Strippung mit dem $H_2$-Strom ausgetragene CO quasi die einzige Verlustquelle im Verfahren darstellt, da aufgrund der niedrigen Temperaturen in der Waschsäule bis auf einige ppm alles CO aus dem Rohgas im $CH_4$ gelöst ist, sowie in der Regeneriersäule aufgrund der vorgegebenen Sumpftemperatur CO nur noch im ppm-Bereich im regenerierten Methan verbleibt.

Das bei der Entspannung bzw. beim Strippen anfallende Gas wird also mit einer Teilmenge des regenerierten Methans in Kontakt gebracht, wodurch der apparative Mehraufwand gegenüber dem bekannten Verfahren minimal ist. Auch ist es in der Regel nicht möglich bzw. nicht wirtschaftlich, bei Teillastbetrieb den die CO/$CH_4$-Trennung betreibenden Kreislauf ($N_2$,CO usw) zu drosseln, daher läßt sich auf diese Weise bei einem Teillastbetrieb von beispielsweise 90% Auslastung etwaiges überschüssiges regeneriertes Methan aus dem Sumpf der CO/$CH_4$-Kolonne sinnvoll einsetzen.

Als besonders günstig im Hinblick auf die CO-Ausbeute hat es sich erwiesen, eine Teilmenge von 5 bis 15 % des regenerierten Methans zuzugeben.

Waschmittelverluste durch in den $H_2$- und CO-Produktströmen mitausgetragenes $CH_4$ werden durch das zu zerlegende Gasgemisch selbst kompensiert. Wird beispielsweise ein Steam-Reformer-Gas verwendet, so enthält dieses zwischen 2 und 10 Mol.% $CH_4$, was wesentlich mehr ist als die Verluste betragen. So ist es notwendig, einen Teil regeneriertes Methan auszuschleusen.

Um insgesamt eine möglichst vollständige Auswaschung des Kohlenmonoxids sowohl aus dem zu zerlegenden Gasgemisch als aus dem bei der Entspannung bzw. Strippung freigesetzten Gas zu erzielen, wird in bevorzugter Weise flüssiges Methan mit -182 bis -173°C, insbesondere -181 bis -178°C, verwendet.

Überdies hat es sich als außerordentlich günstig erwiesen, wenn während der Entspannung bzw. Strippung gekühlt wird, womit eine möglichst vollständige Abfuhr der Lösungswärme erzielt wird.

Des weiteren wird die Zugabe des regenerierten Methans bei der Entspannung bzw. Strippung in bevorzugter Weise in mindestens 3 theoretischen Gleichgewichtsstufen durchgeführt.

Die erfindungsgemäße Vorrichtung zur Durchführung des Verfahrens besteht aus einer Wasch- und einer Regeneriersäule mit dazwischengeschalteter Strippsäule oder Entspannungsbehälter. Wasch- und Regeneriersäule sind über eine Leitung für regeneriertes Methan, die vom Sumpf der Regeneriersäule zum Kopf der Waschsäule führt, miteinander verbunden. Des weiteren sind erfindungsgemäß die Strippsäule bzw. der Entspannungsbehälter über eine Stichleitung der Leitung für regeneriertes Methan, welche zum Kopf der Strippsäule bzw. des Entspannungsbehälters führt und über eine Leitung für teilbeladenes Methan mit der Regeneriersäule verbunden. Außerdem enthält die Strippsäule bzw. der Entspannungsbehälter im unteren Teil einen Zulauf für beladenes Methan, der mit dem Sumpf der Waschsäule in Verbindung steht. Auf diese Weise wird eine starke Reduzierung der CO-Verluste durch Rückwaschung erreicht.

Eine weitere vorteilhafte Ausgestaltung der Erfindung beinhaltet, daß in dem Entspannungsbehälter oder der Strippsäule am Kopf eine Kühlfalle installiert ist. Ebenso können erfindungsgemäß die einzelnen Boden der Strippsäule auch jeweils als Schüttungen aus Füllkörperelementen ausgebildet sein. Diese zusätzlichen Einbauten führen dazu, daß bei einer vorgegebenen, zu erzielenden CO-Ausbeute der Bedarf an Waschmittel bzw. $CH_4$ reduziert wird und damit auch die Betriebskosten verringert werden.

Insgesamt hat die Erfindung den Vorteil, daß damit CO-Ausbeuten größer als 99% erreicht werden.

Die Erfindung ist einsetzbar bei allen Verfahren zum Zerlegen von Gasgemischen, die im wesentlichen aus $H_2$, $CH_4$ und CO bestehen, wie insbesondere Steam-Reformer-Gas. Selbstverständlich kommen auch Gasgemische in Frage, die noch weitere inerte Gaskomponenten, wie beispielsweise Stickstoff, Argon oder Helium, enthalten. Diese Komponenten werden dann entsprechend ihrem Lösungs- bzw. Kondensationsverhalten in den einzelnen Gasströmen auftreten, ohne den erfindungsgemäßen Verfahrensablauf zu verändern.

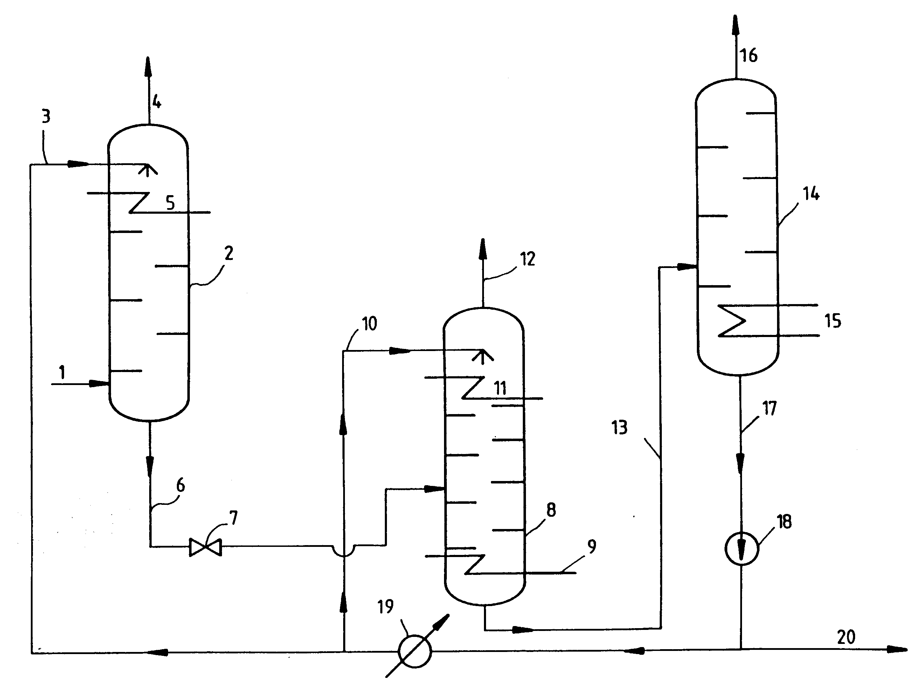

Nachfolgend werden weitere Einzelheiten des erfindungsgemäßen Verfahrens sowie der erfindungsgemäßen Vorrichtung anhand eines Ausführungsbeispiels erläutert, das in Figur 1 schematisch dargestellt ist.

Dabei wird gemäß Figur 1 Rohgas unter hohem Druck und mit -181°C über Leitung 1 dem unteren Teil einer Waschsäule 2 zugeführt. Das Rohgas besteht zu 70 Mol.% aus Wasserstoff, zu 22 Mol.% aus Kohlenmonoxid und zu 5 Mol.% aus Methan sowie einem Restanteil von 3 Mol.% an Inertgasen.

Das aufsteigende Rohgas wird nun mit im Gegenstrom geführtem, am Kopf von Waschsäule 2 via Leitung 3 aufgegebenem, gereinigtem tiefkaltem $CH_4$ gewaschen, wobei sich das CO im $CH_4$ löst und der Wasserstoff als ein erstes Produkt am Kopf der Waschsäule 2 über Leitung 4 abgezogen und weiterem - nicht dargestellten - Verwendungszwecken zugeführt wird. Dieser Wasserstoff enthält noch ca. 1,5 Mol.% $CH_4$ sowie CO und Inertgase im ppm-Bereich.

Um das CO optimal auszuwaschen, wird flüssiges Methan mit -180°C verwendet und die entstehende Lösungswärme mittels einer Kühlfalle 5 abgeführt. Die Temperatur des verwendeten Methans ist nach unten durch den Schmelzpunkt des Methans von -182,5°C begrenzt.

Vom Sumpf der Waschsäule 2 wird mittels Leitung 6 und Ventil 7, in dem auf einen mittleren Druck entspannt wird, mit CO beladenes Waschmittel bzw. Methan, welches außerdem noch ungefähr 4 Mol.% $H_2$ enthält, abgeführt und einem $H_2$-Stripper 8, der beispielsweise 12 theoretische Böden enthält, zwischen dem 5. und 6. theoretischen Boden aufgegeben. Im Sumpf des $H_2$-Strippers 8 ist eine Heizung 9 zur Erzeugung des Strippdampfes vorgesehen.

Am Kopf des $H_2$-Strippers 8 wird über Leitung 10 gereinigtes Methan mit einer Temperatur von -180°C aufgegeben, welches im Rücklauf aus dem bei der Strippung freigesetzten $H_2$ darin verbliebenes CO auswäscht. Zur Erhöhung der Effektivität des Waschvorgangs bzw. zur Verringerung der notwendigen Waschmittelmenge ist unterhalb der $CH_4$-Zufuhr eine Kühlfalle 11 vorgesehen.

Über Kopf des $H_2$-Strippers 8 wird eine $H_2$-Fraktion mit 93,8 Mol.% $H_2$, 3,0 Mol.% $CH_4$ und 3,0 Mol.% CO sowie Restinertgasen abgezogen (Leitung 12).

Das nunmehr praktisch nur noch mit CO beladene Methan (39,6 Mol.% CO, 59,8 Mol.% $CH_4$) wird vom Sumpf des Strippers 8 über Leitung 13 mit einer Temperatur von -165°C einer Regenerier- bzw. Rektifiziersäule 14, welche im Sumpf eine Heizung 15 aufweist, zugeführt. Mittels der Heizung 15 wird im Sumpf eine Temperatur von -153°C eingestellt.

Am Ende der Rektifikation wird über Leitung 16 das CO-Produkt abgezogen, in diesem Fall beträgt die CO-Ausbeute 99,7%.

Vom Sumpf der Rektifiziersäule 14 wird das gereinigte Methan (Leitung 17) mittels einer Pumpe 18 auf Rohgasdruck gebracht und in einem Wärmetauscher 19 auf Rohgastemperatur abgekühlt und sodann in die Wäschen (via Leitungen 3 und 10) rückgeführt.

Um eine Anreicherung des Methans oder irgendwelcher Inertgase im Waschmittelkreislauf zu unterbinden, ist es notwendig, kontinuierlich einen Teilstrom des gereinigten Methans über Leitung 20 abzuführen.

## Patentansprüche

**1.**    Verfahren zum Zerlegen eines im wesentlichen Wasserstoff, Methan und Kohlenmonoxid enthaltenden Gasgemisches mittels einer physikalischen Tieftemperaturwäsche mit flüssigem Methan sowie nachfolgender $H_2$-Abtrennung aus dem beladenen Methan mittels Strippen oder Entspannen und daran anschließender Regenerierung des beladenen Methans durch $CO/CH_4$-Trennung, dadurch gekennzeichnet, daß eine Teilmenge des regenerierten Methans beim Entspannen bzw. beim Strippen zugegeben wird.

2. Verfahren nach Anspruch 1, dadurch gekennzeichnet, daß eine Teilmenge von 5 bis 15 % des regenerierten Methans zugegeben werden.

3. Verfahren nach den Ansprüchen 1 oder 2, dadurch gekennzeichnet, daß flüssiges Methan mit -182 bis -173°C, insbesondere -181 bis -178°C, verwendet wird.

4. Verfahren nach einem der Ansprüche 1 bis 3, dadurch gekennzeichnet, daß während der Entspannung bzw. Strippung gekühlt wird.

5. Verfahren nach einem der Ansprüche 1 bis 4, dadurch gekennzeichnet, daß die Zugabe des regenerierten Methans bei der Entspannung bzw. Strippung in mindestens drei theoretischen Gleichgewichtsstufen durchgeführt wird.

6. Vorrichtung zur Durchführung des Verfahrens gemäß Anspruch 1 bestehend aus einer Wasch- und einer Regeneriersäule mit dazwischengeschalteter Strippsäule oder Entspannungsbehalter, wobei die Wasch- und Regeneriersäule über eine Leitung für regeneriertes Methan, die vom Sumpf der Regeneriersäule zum Kopf der Waschsäule führt, miteinander verbunden sind, wobei die Strippsäule bzw. der Entspannungsbehälter über eine Leitung für teilbeladenes Methan, die dem Sumpf angeschlossen ist, mit der Regeneriersäule verbunden sind und wobei die Strippsäule bzw. der Entspannungsbehälter im unteren Teil einen Zulauf für beladenes Methan enthalten, der mit dem Sumpf der Waschsäule in Verbindung steht, dadurch gekennzeichnet, daß eine Stichleitung von der Leitung für regeneriertes Methan zum Kopf der Strippsäule bzw. des Entspannungsbehälters führt.

7. Vorrichtung nach Anspruch 6, dadurch gekennzeicht, daß in dem Entspannungsbehälter oder der Strippsäule am Kopf eine Kühlfalle installiert ist.

8. Vorrichtung nach Anspruch 7, dadurch gekennzeichnet, daß in die Strippsäule installierte Böden jeweils als eine Schüttung aus Füllkörperelementen ausgebildet sind.

9. Vorrichtung nach einem der Ansprüche 6 bis 8, dadurch gekennzeichnet, daß im Sumpf der Strippsäule eine Heizung eingebaut ist.

**Claims**

1. A process for separating a gas mixture which substantially contains hydrogen, methane and carbon monoxide by physical low-temperature scrubbing with liquid methane and by following $H_2$-separation from the charged methane by stripping or expansion and subsequent regeneration of the charged methane by $CO/CH_4$-separation, characterised in that a sub-quantity of the regenerated methane is added during the expansion or stripping.

2. A process as claimed in Claim 1, characterised in that a sub-quantity of 5 to 15% of the regenerated methane is added.

3. A process as claimed in Claims 1 or 2, characterised in that liquid methane at a temperature of -182 to -173°C, in particular -181 to -178°C, is used.

4. A process as claimed in one of Claims 1 to 3, characterised in that cooling takes place during the expansion or stripping.

5. A process as claimed in one of Claims 1 to 4, characterised in that the addition of the regenerated methane during the expansion or stripping takes place in at least three theoretical equilibrium stages.

6. A device for executing the process claimed in Claim 1 comprising a scrubbing and a regenerating column with an interposed stripping column or expansion container, wherein the scrubbing and regenerating columns are connected to one another via a line for regenerated methane which leads from the sump of the regenerating column to the head of the scrubbing column, wherein the stripping column or expansion container is connected to the regenerating column via a line for partially charged methane which is connected to the sump, and wherein the stripping column or expansion container contains, in the lower part, an inlet for charged methane which is connected to the sump of the scrubbing column, characterised in that a tap line leads from the line for regenerated methane to the head of the stripping column or expansion container.

7. A device as claimed in Claim 6, characterised in that a cold trap is installed at the head of the expansion container or stripping column.

8. A device as claimed in Claim 7, characterised in that plates installed in the stripping column each comprise a packing of filling elements.

9. A device as claimed in one of Claims 6 to 8, characterised in that a heating device is installed in the sump of the stripping column.

**Revendications**

1. Procédé de séparation d'un mélange gazeux contenant essentiellement de l'hydrogène, du méthane et du monoxyde de carbone, au moyen d'un lavage physique à basse température à l'aide de méthane liquide, suivi de la séparation du $H_2$ contenu dans le méthane chargé d'impuretés au moyen d'un strippage ou d'une détente puis de la régénération ultérieure du méthane chargé d'impuretés par séparation de $CO/CH_4$, caractérisé en ce qu une quantité partielle du méthane régénéré est introduite au niveau de la détente et/ou du strippage.

2. Procédé selon la revendication 1, caractérisé en ce qu'une quantité partielle de 5 à 15% du méthane régénéré est ainsi introduite.

3. Procédé selon les revendications 1 ou 2, caractérisé en ce que le méthane liquide est utilisé à une température comprise entre -182 et -173° C, notamment entre -181 et -178° C.

4. Procédé selon l'une quelconque des revendications 1 à 3, caractérisé en ce que, pendant la détente et/ou le strippage, est effectué un refroidissement.

5. Procédé selon l'une quelconque des revendications 1 à 4, caractérisé en ce que l'introduction de méthane régénéré lors de la détente et/ou du strippage est effectuée en au moins trois étages d'équilibre théoriques.

6. Dispositif de mise en oeuvre du procédé selon la revendication 1, constitué d'une colonne de lavage et d'une colonne de régénération entre lesquelles est intercalée une colonne de strippage ou un récipient de détente, la colonne de lavage et la colonne de régénération étant reliées entre elles par une conduite de méthane régénéré reliant le fond de la colonne de régénération et la tête de la colonne de lavage, la colonne de strippage et/ou le récipient de détente étant reliée à une colonne de régénération par une conduite de méthane partiellement chargé d'impuretés reliant le fond de la colonne de strippage et/ou le récipient de détente à la tête de la colonne de lavage, la colonne de strippage et le récipient de détente comportant, dans leur partie inférieure, une conduite d'arrivée de méthane chargé d'impuretés, reliée au fond de la colonne de lavage, caractérisé en ce qu'une conduite de prélèvement ou piquage réalisé sur la conduite de méthane régénéré conduit à la tête de la colonne de strippage et/ou du récipient de détente.

7. Dispositif selon la revendication 6, caractérisé en ce que, en tête du récipient de détente ou de la colonne de strippage, est disposé un piège à froid.

8. Dispositif selon la revendication 7, caractérisé en ce que les divers plateaux de la colonne de strippage sont réalisés à l'aide d'éléments de remplissage.

9. Dispositif selon l'une quelconque des revendications 6 à 8, caractérisé en ce que, une installation de chauffage est disposée en cuve de la colonne de strippage.